# DEMANDE DE BREVET EUROPEEN

(11) **EP 4 614 778 A2**
(43) Date de publication de la demande: **10.09.2025**
(21) Numéro de dépôt: 25192662.2
(22) Date de dépôt: 02.03.2021
(51) Int. Cl.: H02K 5/22

(54) **ENSEMBLE COMPRENANT UNE MACHINE ÉLECTRIQUE TOURNANTE, UN CONNECTEUR ET UN MODULE ÉLECTRONIQUE**

(30) Priorité: 19.03.2020 FR 2002720
(62) Demande divisionnaire de: 21708011.8
(71) Demandeur: Valeo Electrification, 95892 Cergy Pontoise (FR)
(72) Inventeur: ARMIROLI, Paul, 94046 CRETEIL CEDEX (FR); LABROSSE, Jean-Claude, 94046 CRETEIL CEDEX (FR)
(74) Mandataire: Valeo Powertrain Systems

(57) **Abrégé**

Ensemble comprenant :
- une machine électrique tournante comportant:
- un rotor monté sur un arbre s'étendant suivant un axe de rotation (X),
- un stator comportant un corps et un bobinage, le bobinage comportant une pluralité de phases, notamment six phases, comprenant chacune deux extrémités,
- un module électronique (5) de commande et/ou de puissance pour l'alimentation en un système de courant polyphasé du bobinage, le module électronique (5) comprenant une pluralité de broches d'entrée (56), et
- un connecteur (52) pour la connexion des phases du bobinage au module électronique comprenant une pluralité de broches de sortie (55) reliées aux phases, autant que de broches d'entrée du module électronique,
caractérisée en ce que les broches de sortie (55) et les broches d'entrée (56) sont connectées entre elles par vissage.

## Description

La présente invention porte sur un ensemble comprenant une machine électrique tournante et un module électronique entre lesquels est interposé un connecteur pour connecter les deux pièces.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre sur des paliers par l'intermédiaire de roulements. Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Les enroulements de phase peuvent être connectées en étoile en triangle.

Le module électronique de puissance et de commande permet d'alimenter le bobinage selon un système de courant polyphasé, par exemple triphasé, par exemple double-triphasé. Le connecteur fait la connexion entre le module et les différents enroulements de phase du bobinage.

Il est connu des connexions de type male-femelle permettant le montage et le démontage du module électronique de la machine électrique. Néanmoins les composants et leur mise en place pour mettre en œuvre de cette fonction sont couteux.

Il existe un besoin de disposer d'un ensemble comprenant une machine électrique tournante et d'un module électronique simplifié et présentant un coût réduit. La présente invention vise à remédier efficacement à ces inconvénients en proposant un ensemble comprenant :
- une machine électrique tournante comportant:
   - un rotor monté sur un arbre s'étendant suivant un axe de rotation,
   - un stator comportant un corps et un bobinage, le bobinage comportant une pluralité de phases reliées aux phases, notamment six phases, comprenant chacune deux extrémités,
- un module électronique de commande et/ou de puissance pour l'alimentation en un système de courant polyphasé du bobinage, le module électronique comprenant une pluralité de broches d'entrée, et
- un connecteur pour la connexion des phases du bobinage au module électronique comprenant une pluralité de broches de sortie, autant que de broches d'entrée du module électronique.

L'ensemble est remarquable en ce que les broches de sortie et les broches d'entrée sont connectées entre elles par vissage. Le vissage permet une connexion simple et peu onéreuse du module électronique et de la machine électrique.

Selon un aspect de l'invention les broches sont directement fixées entres elles sans qu'il n'y ait de pièce intermédiaire entre elles qui nécessitent plusieurs opérations d'assemblage. La liaison est ainsi simplifiée. Le vissage permet de se passer d'éléments additionnels pour former la connexion électrique, tel que des boitiers ou des éléments de positionnement.

Selon un aspect de l'invention, l'ensemble dispose d'autant de broches de sortie, que de broches d'entrée. Les broches de sortie et les broches d'entrée sont en nombre identique à celui des phases.

Selon un aspect de l'invention, les broches d'entrée et de sortie s'étendent dans une même direction, par exemple axialement, par exemple dans un plan radial. Dans cette configuration les broches de sortie ne sont pas perpendiculaires aux broches d'entrée.

Selon un aspect de l'invention, les broches d'entrée et de sortie peuvent être rectiligne. En variante les broches d'entrée et/ou les broches de sortie peuvent être coudées.

Selon un aspect de l'invention, les broches de sortie et les broches d'entrée peuvent présenter chacune une ouverture. Les ouvertures peuvent être taraudées. Les ouvertures peuvent être perpendiculaire à la direction d'extension des broches. Les ouvertures peuvent être orientée radialement. Les ouvertures peuvent être orientée radialement. Chaque ouverture d'une broche de sortie peut être en regard d'une ouverture d'une broche d'entrée pour le passage d'un organe de fixation. Chaque broche d'entrée peut être superposée avec une unique broche de sortie. Le contact électrique peut se faire directement de broche à broche sans passer par l'organe de fixation.

Les organes de fixation peuvent comprendre une tête et une partie filetée. Les organes de fixation peuvent être par exemple des vis ou des boulons.

Selon un aspect de l'invention, les ouvertures des broches de sortie peuvent être décalées axialement. Les organes de fixation peuvent être décalés axialement les uns des autres. En variante, les ouvertures des broches de sortie peuvent être sur une même hauteur axiale. Les organes de fixation ne sont ainsi pas décalés les uns des autres.

Selon un aspect de l'invention, toutes les ouvertures sont orientées sensiblement dans la même direction, par exemple radialement vers l'extérieur, par exemple axialement. Cela permet un vissage aisé des organes de fixation depuis l'extérieur de l'ensemble lors de l'assemblage de la machine avec le module électronique. Les ouvertures peuvent être orientées axialement, notamment lorsque les broches d'entrée ou de sortie sont coudées. Cela permet un vissage simplifié depuis une zone extérieure de l'ensemble, notamment depuis l'arrière de l'ensemble.

Selon un aspect de l'invention, les broches de sortie peuvent toutes être concentrées sur une portion angulaire prédéterminée, notamment une unique portion angulaire. Cette portion angulaire prédéterminée peut être inférieure à 30 degrés. Cette compacité permet un vissage simplifié et libère de la place pour les autres composants de l'ensemble. Disposer les broches de sortie sur une unique portion angulaire permet de simplifier l'opération d'assemblage.

Selon un aspect de l'invention, les broches de sortie sont disposées selon plusieurs strates décalées entre elles. Le décalage peut être radial. Le décalage peut être axial.

Selon un aspect de l'invention, le connecteur peut comprendre au moins deux strates, en particulier uniquement deux, une extérieure, notamment radialement extérieure, et une intérieure, notamment radialement intérieure. Les strates peuvent comprendre un nombre de broches de sortie différents. La strate extérieure peut comprendre quatre broches de sortie et la strate intérieure peut comprendre deux broches de sortie.

Selon un aspect de l'invention, les broches de sortie ou les broches d'entrée des strates extérieures peuvent être rétrécies localement pour le passage des organes de fixation associés aux strates intérieures. La compacité circonférentielle du connecteur en est à nouveau améliorée.

Selon un aspect de l'invention, les ouvertures des broches de sortie des strates radialement intérieures sont décalées, notamment axialement, des ouvertures des broches de sortie des strates extérieures .Selon un aspect de l'invention, la strate extérieure ou l'une des strates extérieures présente au moins un rétrécissement.

Selon un aspect de l'invention, au moins un des broches d'entrée des strates extérieures et/ou au moins une des broches de sorties des strates extérieures peut présenter un rétrécissement. La forme du rétrécissement peut être adaptée au passage de l'extérieur vers l'intérieur d'un des organes de vissage ou d'un outillage pour le vissage.

Le rétrécissement peut être ménagé sur un bord de la broche de sortie ou de la broche d'entrée. Le rétrécissement peut être arrondi. La broche de sortie ou la broche d'entrée peut comprendre un bord droit et un bord sur lequel est ménagé le rétrécissement.

Selon un aspect de l'invention, les broches d'entrée des strates extérieures et/ou les broches de sorties des strates extérieures présentent chacune un rétrécissement, notamment un rétrécissement arrondi. Ces rétrécissements permettent le passage des organes de fixation, notamment de la tête, associées aux strates intérieures sont avoir à élargir circonférentiellement le connecteur.

Selon un aspect de l'invention, les rétrécissements de deux broches de sortie ou d'entrée adjacentes peuvent être en regard l'une de l'autre. Ainsi ces deux rétrécissements sont dédiés à un même organe de fixation.

Selon un aspect de l'invention, le connecteur comprend un logement dans lequel sont disposées toutes les broches d'entrée et toutes les broches de sortie. Ce logement peut être étanche. Ce logement peut être formé par une paroi avec laquelle coopère un joint. La paroi peut être solidaire de l'un de la machine et du module électronique. Le joint peut être monté sur l'autre de la machine et du module l'électronique. La paroi peut être d'orientation axiale. La paroi peut présenter des bords émoussés. En variante, chacun de la machine et du module électronique peut être solidaire d'une paroi, le joint étant disposé entre ces deux parois.

Selon un aspect de l'invention, chaque broche de sortie peut être entourée d'un deuxième joint. Cela permet d'éviter les connexions fluidiques entre la machine et le logement. Chaque broche d'entrée peut être entourée d'un troisième joint. Cela permet d'éviter les connexions fluidiques entre le module électronique et le logement.

Selon un aspect de l'invention, la paroi peut présenter une trappe escamotable. Cela permet de mettre en place les organes de fixation. Une fois les organes de connexion montés, la trappe est obstruée afin de garantir la fermeture de logement.

Selon un aspect de l'invention, la machine électrique peut comprendre un interconnecteur. L'interconnecteur comprend des pistes conductrices, par exemples des barres omnibus, reliant les extrémités de phase et les broches de sorties du connecteur. Les pistes conductrices permettent d'amener les extrémités de phase vers la portion angulaire prédéterminée, en particulier vers le logement. Les sorties de phase, l'interconnecteur et le connecteur se succèdent au sens de la transmission du courant.

Selon un aspect de l'invention, l'interconnecteur comprend une pluralité de pistes conductrices agencées pour définir une configuration en triangle. En variante, l'interconnecteur comprend une pluralité de pistes conductrices agencées pour connecter des extrémités de phase aux broches de sortie du connecteur et une piste conductrice, définissant le point neutre, pour connecter les autres extrémités de phase pour définir une configuration en étoile.

Les pistes conductrices de phases peuvent être surmoulées, notamment dans un corps de surmoulage. Le joint peut être solidaire du corps de surmoulage.

Selon un aspect de l'invention, le bobinage peut être de type double triphasé, le connecteur comprenant six broches de sortie et six broches d'entrée.

Selon un aspect de l'invention, la machine électrique peut être refroidie par huile et le module électronique peut être refroidie par eau. En variante, la machine électrique et le module électronique peuvent être refroidi par eau.

Selon un aspect de l'invention, le module électronique est décalé axialement de la machine électrique. La machine électrique et le module électronique se succèdent axialement. Dans une telle configuration, les broches d'entrée et les broches de sorties peuvent être d'orientation axiale.

En variante, dans une configuration dite « backpack », le module électronique est porté radialement par la machine électrique. Dans une telle configuration, les broches d'entrée et/ou les broches de sortie du connecteur peuvent être coudées.
[Fig. 1] La figure 1 est une vue schématique en coupe longitudinale de l'ensemble selon la présente invention;
[Fig. 2] La figure 2 est une vue en coupe longitudinale d'un exemple de machine électrique de l'ensemble de la figure 1;
[Fig. 3] La figure 3 est une vue en perspective de la machine de la figure 2;
[Fig. 4] La figure 4 est une vue en perspective et partielle d'un exemple de connecteur de l'ensemble de la figure 1;
[Fig. 5] La figure 5 est une vue en perspective et partielle d'un autre exemple de connecteur de l'ensemble de la figure 1; et
[Fig. 6] La figure 6 est une vue axiale de la figue 5.

Les éléments identiques, similaires, ou analogues, conservent la même référence d'une figure à l'autre.

Dans la suite de la description, on entend par un élément "avant", un élément situé du côté de l'extrémité de l'arbre dépassant de la machine et destinée à porter un pignon ou une poulie, et par élément "arrière" un élément situé du côté opposé.

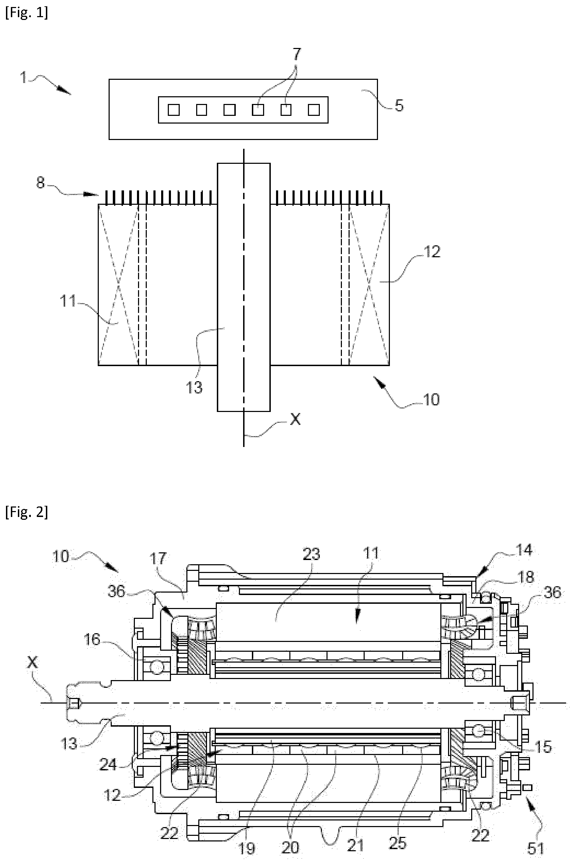

La figure 1 montre un ensemble 1 de traction qui pourra être intégrée à une architecture de traction de véhicule automobile, notamment un véhicule de faible puissance. L'ensemble comprend une machine électrique 10 tournante comportant un stator 11 polyphasé, fixe, et entourant un rotor 12, mobile en rotation et monté sur un arbre 13 s'étendant suivant un axe de rotation X. l'axe de rotation X est défini comme l'axe de la machine électrique tournante 10.

Cet ensemble 1 pourra être destinée à être accouplée à une boîte de vitesses appartenant à une chaîne de traction de véhicule automobile. L'ensemble 1 est apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique. La puissance de la machine 10 pourra être comprise entre 10kW et 50kW. Alternativement, la machine électrique 10 pourra être implantée sur un essieu du véhicule automobile, notamment un essieu arrière.

Dans l'exemple considéré, la machine électrique 10 présente avantageusement une tension de fonctionnement inférieure à 60 Volts, et valant de préférence 48 Volts. Typiquement, le couple fourni par la machine électrique est compris entre 300N.m et 500N.m.

La machine électrique tournante 10 est avantageusement de type réversible, c'est-à-dire qu'elle est apte à fonctionner dans un mode moteur pour appliquer un couple moteur aux roues à partir de l'énergie électrique de la batterie, et dans un mode générateur pour recharger une batterie à partir d'une puissance mécanique prélevée aux roues.

Dans l'exemple considéré, l'ensemble comporte un module électronique 5 de puissance et de commande, encore appelé onduleur de puissance, pour l'alimentation en un système de courant polyphasé du stator 11.

Dans l'exemple considéré, le module électronique 5 comporte des éléments de commutation 17, tels que des transistors de type MOSFET, à faible résistance thermique. Ces éléments de commutation 7 sont de préférence à base de nitrure de gallium (GaN). Le module électronique 5 comporte également un circuit électronique de contrôle desdits éléments de puissance, d'autres composants électroniques, notamment des capacités, et un dissipateur thermique.

Ce module comporte des éléments de puissance, tels que des transistors de type MOSFET, reliés aux sorties de phase et de neutre, ainsi qu'un circuit électronique de contrôle desdits éléments de puissance.

Dans l'exemple considéré, la machine électrique tournante 10 comporte également des moyens de dissipation thermique 8.

Dans l'exemple considéré, le module électronique 5 est disposé d'un côté d'une extrémité axiale de la machine électrique 10. Dans une configuration non représentée dite « backpack », le module électronique 5 est porté radialement par la machine électrique.

Dans l'exemple considéré, la machine électrique 10 peut être refroidie par huile et le module électronique 5 peut être refroidie par eau. En variante, la machine électrique 10 et le module électronique 5 peuvent être refroidi par eau.

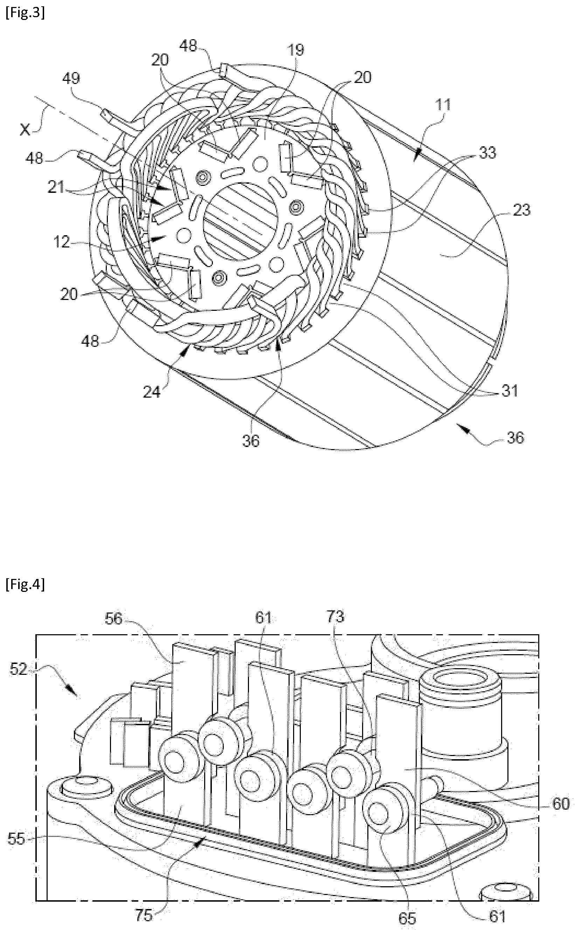

Les figures 2 et 3 montrent un exemple de machine électrique 10 comprenant une machine électrique tournante 10 comportant un stator polyphasé 11 entourant un rotor 12 monté sur un arbre 13 s'étendant suivant un axe X. Le stator 11 entoure le rotor 12 avec présence d'un entrefer entre la périphérie interne du stator 11 et la périphérie externe du rotor 12. Le stator 11 est monté dans un carter 14 muni d'un palier avant 17 et d'un palier arrière 18. Les paliers 17 et 18 comportent chacun un logement de réception d'un roulement 16 afin d'assurer un montage à rotation de l'arbre 13 par rapport au carter 14 de la machine électrique.

Dans l'exemple considéré, comme on peut le voir sur la figure 3, le rotor 12 comporte un corps 19 sous la forme d'un paquet de tôles. Des aimants permanents 20 sont implantés dans des cavités 21 du corps 19. Dans l'exemple représenté, les aimants 20 sont implantés suivant une configuration en V. Alternativement, les aimants 20 sont implantés radialement à l'intérieur des cavités 21, les faces en vis-à-vis de deux aimants 20 adjacents étant de même polarité. Il s'agit alors d'une configuration à concentration de flux. Les aimants 20 pourront être en terre rare ou en ferrite selon les applications et la puissance recherchée de la machine électrique 10.

Dans l'exemple considéré, le rotor 12 comporte deux flasques 22 plaqués chacun contre une face d'extrémité axiale du corps de rotor 19. Ces flasques 22 assurent une retenue axiale des aimants 20 à l'intérieur des cavités 21 et servent également à équilibrer le rotor 12. Un ressort 25 pourra être inséré à l'intérieur de chaque cavité afin de maintenir radialement les aimants 20 à l'intérieur des cavités 21.

Dans l'exemple considéré, le stator 11 comporte un corps 23 constitué par un paquet de tôles ainsi qu'un bobinage 24. Le corps 23 est formé par un empilement de feuilles de tôles indépendantes les unes des autres et maintenues sous forme de paquet au moyen d'un système de fixation adapté. Le corps 23 est muni de dents 31 délimitant deux à deux des encoches 33 pour le montage du bobinage 24 du stator 11.

Dans l'exemple considéré, le bobinage 24 comporte une pluralité de phase 48, sous la forme d'enroulement, traversant les encoches 33 et formant des chignons 36 s'étendant en saillie de part et d'autre du corps de stator 23. Chaque phase 48 comprend deux extrémités. Les phases sont obtenues ici à partir d'éléments conducteurs en forme d'épingles dont les extrémités sont reliées entre elles par exemple par soudage. Les phases du bobinage 24 présente ici une configuration en étoile de type triphasé.

Dans l'exemple considéré, ces phases 48 sont reliées au module électronique 5 par l'intermédiaire d'un connecteur 52 et d'un interconnecteur 51.

Dans l'exemple considéré, l'interconnecteur 51 assure une connexion électrique des extrémités de phases 48 avec le connecteur 52 via des pistes conductrices, représentées aux figure 4 à 6. Ces pistes conductrices peuvent être par exemple des barres omnibus. Ces pistes conductrices de phases peuvent être surmoulées, notamment dans un corps de surmoulage. Le corps est réalisé avantageusement dans un matériau isolant, notamment en plastique. Le corps présente une forme annulaire sensiblement coaxiale avec l'arbre 13.

En particulier, l'interconnecteur 51 assure une connexion électrique de chaque extrémité de phase 48 avec une broche de sortie correspondante du connecteur 52. Les broches de sortie sont en nombre identique à celui des phases. Ces broches de sortie seront décrites plus en détails en référence aux figures suivantes.

L'interconnecteur 51 permet également d'assurer une connexion électrique des extrémités de phases entre elles pour former un point neutre 49 dans cette configuration étoile.

Dans l'exemple considéré, l'interconnecteur 51 est fixé sur une face du palier arrière 18 tournée vers l'extérieur de la machine électrique 10. Il sera possible de prévoir des moyens d'indexage pour garantir un positionnement correct de l'interconnecteur 51 par rapport au palier 18.

Dans l'exemple considéré, les moyens de fixation de l'interconnecteur 51 sur le palier 18 pourront consister en des moyens de fixation, tels que des vis, traversant des trous de fixation ménagés dans l'interconnecteur 51 et situés en coïncidence de trous taraudés réalisés dans le palier arrière 18.

En référence aux figures 4 à 6, nous allons décrire en détail un exemple de connecteur 52 selon l'invention.

Dans les exemples considérés maintenant, le bobinage 24 est de type double triphasé. Le connecteur 52 comporte alors six broches de sorties 55, autant de de phases. Le module électronique comprend quant à lui six broches d'entrée 56 autant que de broches d'entrée et de phases 48.

Dans les exemples considérés, les broches d'entrée 56 et de sortie 55 s'étendent dans une même direction axiale. En variante, les broches peuvent s'étendre quand un plan radial lorsque l'ensemble 1 est dans la configuration « backpack ».

Dans les exemples considérés, les broches d'entrée 56 et de sortie 55 sont rectilignes. En variante les broches d'entrée et/ou les broches de sortie peuvent être coudées. Cela peut être le cas des broches de sortie 56 dans le cas d'une configuration « backpack » de l'ensemble 1.

Dans les exemples considérés, les broches de sortie 55 et les broches d'entrée 56 sont connectées entre elles par vissage. Les broches de sortie 55 et les broches d'entrée présenter chacune une ouverture 60, 61. Les ouvertures 60, 61 sont ici taraudées et perpendiculaires à la direction d'extension des broches, c'est-à-dire sensiblement radialement. Chaque ouverture d'une broche de sortie 60 est en regard d'une ouverture d'une broche d'entrée 61 pour le passage d'un organe de fixation 65.

Dans les exemples considérés, les ouvertures des broches de sortie 60 sont décalées axialement, les organes de fixation 65 sont donc décalés axialement les uns des autres. Cela permet un vissage aisé de ces organes de fixation depuis l'extérieur de l'ensemble 1 lors de l'assemblage de la machine électrique 10 avec le module électronique 5.

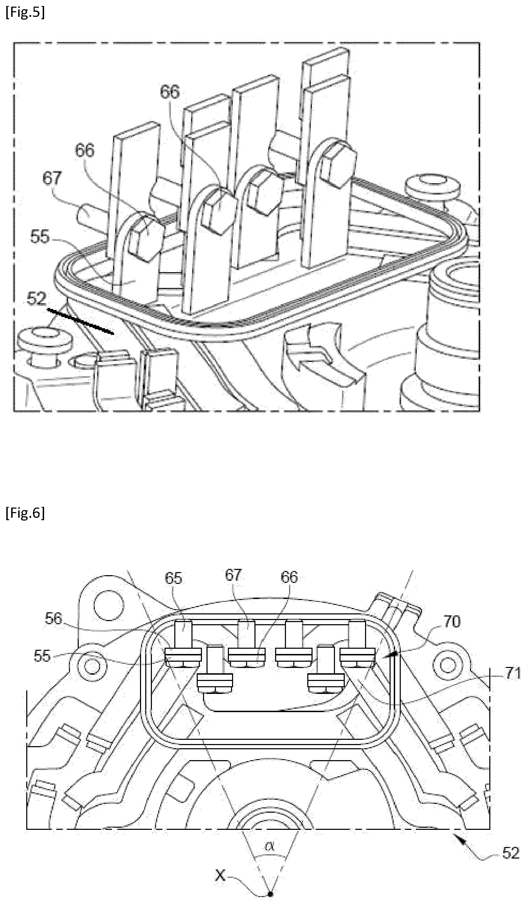

Dans les exemples considérés, chaque organe de fixation 65 comprend une tête 66 et une partie filetée 67. La figure 4 présente des vis en tant qu'organes de fixation 65 tandis que les figures 5 et 6 présentent des boulons.

Dans les exemples considérés, les broches d'entrée 56 et les broches de sortie 55 sont toutes concentrées sur une portion angulaire prédéterminée α. Cette portion angulaire prédéterminée est par exemple égale à 30 degrés. Cette compacité permet un vissage simplifié et libère de la place pour les autres composants de l'ensemble 1. Les pistes conductrices de l'interconnecteur 51 permettent d'amener les extrémités de phase 48 vers la portion angulaire prédéterminée α. Cela permet de localiser la zone de connexion électrique.

Dans les exemples considérés, les broches de sortie 55 sont disposées selon plusieurs strates décalées radialement entre elles, ici deux strates, une radialement extérieure 70 et une radialement intérieure 71. La strate radialement extérieure 70 comprend quatre broches de sortie 55 et la strate radialement intérieure 71 comprend deux broches de sortie 55. Les ouvertures des broches de sortie 60 sont ainsi décalées axialement et radialement.

Dans les exemples considérés, les broches d'entrée 56 des strates radialement extérieures sont rétrécies localement pour le passage des organes de fixation 65 associés à la strate radialement intérieure 71. Elles présentent en effet un rétrécissement 73 arrondi pour le passage des desdits organes. Les ouvertures des broches de sortie 60 des strates radialement intérieures 71 sont décalées axialement des ouvertures des broches de sortie des strates extérieures.

Dans les exemples considérés, le connecteur 52 comprend un logement 75 dans lequel sont disposées toutes les broches d'entrée 56 et toutes les broches de sortie 55. Ce logement est partiellement visible aux figures 4 à 6. Ce logement peut être étanche. Ce logement peut être formé par une paroi avec laquelle coopère un joint 76 monté sur la machine électrique 10. La paroi peut être solidaire de l'un de la machine 10 et du module électronique 5. La paroi peut être d'orientation axiale. La paroi peut présenter des bords émoussés.

Dans les exemples considérés, chaque broche de sortie peut être entourée d'un deuxième joint. Chaque broche d'entrée peut être entourée d'un troisième joint. La paroi peut présenter une trappe escamotable.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres

## Revendications

1. Ensemble (1) comprenant :
- une machine électrique tournante (10) comportant:
- un rotor (12) monté sur un arbre (13) s'étendant suivant un axe de rotation (X),
- un stator (11) comportant un corps (23) et un bobinage (24), le bobinage (24) comportant une pluralité de phases (48), notamment six phases, comprenant chacune deux extrémités,
- un module électronique (5) de commande et/ou de puissance pour l'alimentation en un système de courant polyphasé du bobinage, le module électronique (5) comprenant une pluralité de broches d'entrée (56), et
- un connecteur (52) pour la connexion des phases du bobinage au module électronique comprenant une pluralité de broches de sortie (55) reliées aux phases, autant que de broches d'entrée du module électronique,
**caractérisée en ce que** les broches de sortie (55) et les broches d'entrée (56) sont connectées entre elles par vissage, les broches de sortie (55) sont toutes concentrées sur une portion angulaire prédéfinie (α), les broches de sortie étant disposées selon plusieurs strates décalées entre elles, notamment décalés radialement.

2. Ensemble (1) selon la revendication 1, les broches d'entrée et de sortie s'étendent axialement.

3. Ensemble (1) selon l'une quelconque des revendications 1 et 2, **caractérisée en ce que** les broches de sortie (55) et les broches d'entrée (56) présentent chacune une ouverture (60, 61), chaque ouverture d'une broche de sortie (60) est en regard d'une ouverture d'une broche d'entrée (61) pour le passage d'un organe de fixation (65).

4. Ensemble (1) selon la revendication précédente, les ouvertures des broches de sortie sont sur une même hauteur axiale.

5. Ensemble (1) selon l'une quelconque des revendications 3 et 4, toutes les ouvertures sont orientées sensiblement dans la même direction.

6. Ensemble (1) selon l'une quelconque des revendications précédentes, au moins un des broches d'entrée des strates extérieures et/ou au moins une des broches de sorties des strates extérieures présente un rétrécissement, le rétrécissement étant ménagé sur un bord de la broche de sortie ou de la broche d'entrée, le rétrécissement étant notamment arrondi.

7. Ensemble (1) selon la revendication précédente, **caractérisé en ce que** les broches d'entrée (56) des strates extérieures (70) et/ou les broches de sorties (55) des strates extérieures (70) présentant chacune un rétrécissement arrondi (73).

8. Ensemble (1) selon l'une quelconque des revendications précédentes, **caractérisée en ce que** les broches d'entrée et les broches de sortie sont toutes disposées dans un logement (75), ledit logement étant notamment étanche.

9. Ensemble (1) selon la revendication précédente; le logement étant formé par une paroi avec laquelle coopère un joint, la paroi étant d'orientation axiale.

10. Ensemble (1) selon la revendication précédente, la paroi présente une trappe escamotable.

11. Ensemble (1) selon l'une quelconque des revendications précédentes, chaque broche de sortie étant entourée d'un deuxième joint.

12. Ensemble (1) selon l'une quelconque des revendications précédentes, **caractérisée en ce que** la machine électrique (10) comprend un interconnecteur (51) comprenant des pistes conductrices de phase reliant les extrémités de phase (48) et les broches de sortie (55)..

13. Ensemble (1) selon l'une quelconque des revendications précédentes, **caractérisée en ce que** le bobinage (24) est de type double triphasé et que le connecteur (52) comprend six broches de sortie (55).

14. Ensemble (1) selon l'une quelconque des revendications précédentes, **caractérisé en ce que** la machine électrique (10) est refroidie par huile et que le module électronique (5) est refroidi par eau.

15. Ensemble (1) selon l'une quelconque des revendications précédentes, **caractérisé en ce que** le module électronique (5) est décalé axialement de la machine électrique (10)

16. Ensemble selon l'une quelconques des revendications précédentes, ledit ensemble étant accouplée à une boîte de vitesses appartenant à une chaîne de traction de véhicule automobile
